# EUROPEAN PATENT SPECIFICATION

(11) **EP 3 779 923 B1**
(45) Date of publication and mention of the grant of the patent: **04.10.2023**
(21) Application number: 19777522.4
(22) Date of filing: 18.03.2019
(51) Int. Cl.: G08G 3/00, B63G 13/00, G01C 21/20, G01S 15/88, G01S 7/537, F41G 9/00, G08G 5/00, G01S 15/89, B63B 49/00, F41G 7/22

(54) **SEARCH SUPPORT FOR CALCULATING A ROUTE FOR SEARCHING AN OBJECT**
SUCHUNTERSTÜTZUNG ZUR BERECHNUNG EINER ROUTE ZUM SUCHEN EINES OBJEKTS
SUPPORT DE RECHERCHE POUR CALCULER UN ITINÉRAIRE POUR RECHERCHER UN OBJET

(30) Priority: 26.03.2018 JP 2018058821
(43) Date of publication of application: 17.02.2021
(73) Proprietor: NEC Corporation, 108-8001 Tokyo (JP)
(72) Inventor: EMURA, Masafumi, Tokyo 108-8001 (JP); OGAWA, Masatsugu, Tokyo 108-8001 (JP); ICHIEN, Masumi, Tokyo 108-8001 (JP); KOBAYASHI, Minoru, Tokyo 108-8001 (JP); YAGI, Masahiro, Tokyo 108-8001 (JP)
(74) Representative: Betten & Resch
(86) International application number: PCT/JP2019/011300
(87) International publication number: WO 2019/188530

(56) References cited:
- JP-A- 2000 292 528
- JP-A- 2013 190 344
- JP-A- 2018 046 427
- KR-A- 20130 018 120
- US-A1- 2011 299 734
- US-A1- 2013 245 931
- US-B1- 6 182 007
- RYAN R PITRE ET AL: "UAV Route Planning for Joint Search and Track Missions An Information-Value Approach", IEEE TRANSACTIONS ON AEROSPACE AND ELECTRONIC SYSTEMS, IEEE SERVICE CENTER, PISCATAWAY, NJ, US, vol. 48, no. 3, 1 July 2012 (2012-07-01), pages 2551-2565, XP011451716, ISSN: 0018-9251, DOI: 10.1109/TAES.2012.6237608

## Description

### TECHNICAL FIELD

The present invention relates to a search support apparatus and a search support method for calculating a search route, and further relates to a computer-readable recording medium where a program for realizing these is recorded.

### BACKGROUND ART

A system is used in which a sensor is mounted in a vehicle and the system searches for an object. In such a system, which is used at sea, in the ocean, or in the air, a method is adopted in which an operator manually inputs waypoints to decide a movement route, regardless of whether a vehicle is manned or unmanned.

Also, for vehicles used on the ground, a method is adopted in which a route is decided by a route search, typified by car navigation in automobiles.

As related technology, Patent Document 1 discloses a flight route search device that searches for an optimal flight route in a combat aircraft. According to this flight route search device, map data is divided into a plurality of cells in the horizontal plane, and based on the map data and enemy force range information, a score regarding an attack avoidance degree of each of the plurality of grids is calculated. Based on the respective scores of the plurality of grids that have been calculated, a search is performed for a flight route from a mission start position to an attack position.

Further, Patent Document 2 discloses a flight plan formulation device that formulates a flight plan to an object position so as to avoid erroneous shots by allies. According to this flight plan formulation device, a flight plan is formulated based on flight route information, weather information, and threat information.

Also, Patent Document 3 discloses an operation support system that calculates a sailing route for minimizing the fuel consumption of a ship.
US 2013/245931 A1 discloses a system for route re-planning including generating enemy force movement predictions to be used during mission planning. During a mission, enemy force movements can be compared to the predictions. By using enemy force movement predictions for an initial comparison, the enemy force movements may only need to be compared to the own force mission plan if the enemy forces deviate from the predictions. When enemy force movement deviates from the predictions, new enemy force movement predictions can be generated. The new enemy force movement predictions can then be compared to the own force mission plan to determine if a route re-plan is needed. The route can be re-planned to determine a route that reduces or eliminates the chance of a lethal encounter with an enemy or threat.
RYAN R PITRE ET AL: "UAV Route Planning for Joint Search and Track Missions An Information-Value Approach", IEEE TRANSACTIONS ON AEROSPACE AND ELECTRONIC SYSTEMS, IEEE SERVICE CENTER, PISCATAWAY, NJ, US, vol. 48, no. 3, 1 July 2012 (2012-07-01), pages 2551-2565, XP011451716, ISSN: 0018-9251, DOI: 10.1109/TAES.2012.6237608 discloses an approach for UAV Route Planning for Joint Search and Track Missions. The cornerstone is a novel objective function that integrates naturally and coherently the conflicting objectives of target detection, target tracking, and vehicle survivability into a single scalar index for path optimization. This objective function is the value of information gained by the mission on average in terms of a summation, where the number of terms reflects the number of targets detected while how large each term is reflects how well each detected target is tracked. The UAV following the path that maximizes this objective function is expected to gain the most valuable information by detecting the most important targets and tracking them during the most critical times.

### LIST OF RELATED ART DOCUMENTS

### PATENT DOCUMENTS

Patent Document 1: Japanese Patent Laid-Open Publication No. 2015-001377
Patent Document 2: Japanese Patent Laid-Open Publication No. H04-298000
Patent Document 3: Japanese Patent Laid-Open Publication No. 2009-286230
Patent Document 4: US 2013/245931 A1

### SUMMARY OF INVENTION

### TECHNICAL PROBLEMS

Incidentally, in a system in which a sensor that is easily affected by the surrounding environment is mounted in a vehicle and the system searches for an object, in a case where the vehicle moves toward the position of the object while searching for the object, it is necessary to understand the surrounding environment and calculate a search route according to the surrounding environment.

However, although the devices disclosed in Patent Documents 1 and 2 described above are devices that calculate a flight route, nothing is disclosed regarding using the above sort of sensor to calculate a search route to the position of an object according to the surrounding environment. Also, in Patent Document 3 as well, although a sailing route is calculated, nothing is disclosed regarding using the above sort of sensor to calculate a search route to the position of an object according to the surrounding environment. Furthermore, in Patent Documents 1 to 3, nothing is disclosed regarding moving to the position of an object while suppressing detection of one's own vehicle by a target that is a threat.

Therefore, even if the technology disclosed in above Patent Documents 1 to 3 is used, it is difficult to calculate a search route to an object position according to the surrounding environment and a target that is a threat.

Objects of the present invention are to provide a search support apparatus as claimed in claim 1, a search support method as claimed in claim 7 and a search support program as claimed in claim 13 for calculating a search route to an object position according to the surrounding environment and a target that is a threat. Preferred embodiments are covered by the appended dependent claims. The scope of the invention is defined by the appended claims.

### SOLUTION TO THE PROBLEMS

In order to achieve the example object described above, a search support apparatus according to an example aspect of the present invention includes:
a search sensor means for searching for an object;
an environment sensor means for measuring a surrounding environment and generating environment information based on measurement results;
a search effective range estimation means for estimating the search effective range of the search sensor means using the environment information and performance information that indicates the performance of the search sensor means for searching an object;
a threat effective range estimation means for estimating the search effective range of a sensor possessed by a target that is a threat using the environment information and performance information that indicates the performance of the sensor possessed by the target; and
a route calculation means for calculating a search route to the object, based on the search effective range of the search sensor means, the search effective range of the sensor possessed by the target, and a distribution of existence probabilities of the target that is a threat.

Also, in order to achieve the example object described above, a search support method according to an example aspect of the present invention includes:
(a) a step of estimating a search effective range of a search sensor unit configured to search for an object, using environment information generated based on measurement results obtained by measuring a surrounding environment with an environment sensor unit and performance information that indicates the performance of the search sensor unit;
(b) a step of estimating the search effective range of a sensor possessed by a target that is a threat using the environment information and performance information that indicates the performance of the sensor possessed by the target; and
(c) a step of calculating a search route to the object, based on the search effective range of the search sensor unit, the search effective range of the sensor possessed by the target, and a distribution of existence probabilities of the target that is a threat.

Furthermore, in order to achieve the example object described above, a computer-readable recording medium according to an example aspect of the present invention includes a program recorded on the computer-readable recording medium, the program including instructions that cause the computer to carry out:
estimating a search effective range of a search sensor unit configured to search for an object, using environment information generated based on measurement results obtained by measuring a surrounding environment with an environment sensor unit and performance information that indicates the performance of the search sensor unit;
estimating the search effective range of a sensor possessed by a target that is a threat using the environment information and performance information that indicates the performance of the sensor possessed by the target; and
calculating a search route to the object, based on the search effective range of the search sensor unit, the search effective range of the sensor possessed by the target, and a distribution of existence probabilities of the target that is a threat.

### ADVANTAGEOUS EFFECTS OF THE INVENTION

As described above, according to the present invention, it is possible to calculate a search route to an object position according to the surrounding environment and a target that is a threat.

### BRIEF DESCRIPTION OF THE DRAWINGS

FIG. 1 is a diagram for showing an example of a search support apparatus.
FIG. 2 is a diagram for showing an example of a search support system including the search support apparatus.
FIG. 3 is a diagram for specifically shows the search support system.
FIG. 4 is a diagram for explaining an object detection probability.
FIG. 5 is a diagram for explaining a probability of being detected by a target that is a threat.
FIG. 6 is a diagram for showing an example of display of a search route.
FIG. 7 is a diagram for showing variations in a detection probability requirement degree and a probability of being detected requirement degree.
FIG. 8 is a diagram for showing an example of operation to calculate a search route.
FIG. 9 is a diagram for showing an example of operation to calculate a movement cost.
FIG. 10 is a diagram for showing an example of a computer that realizes the search support apparatus.

### EXAMPLE EMBODIMENT

### (Example Embodiment)

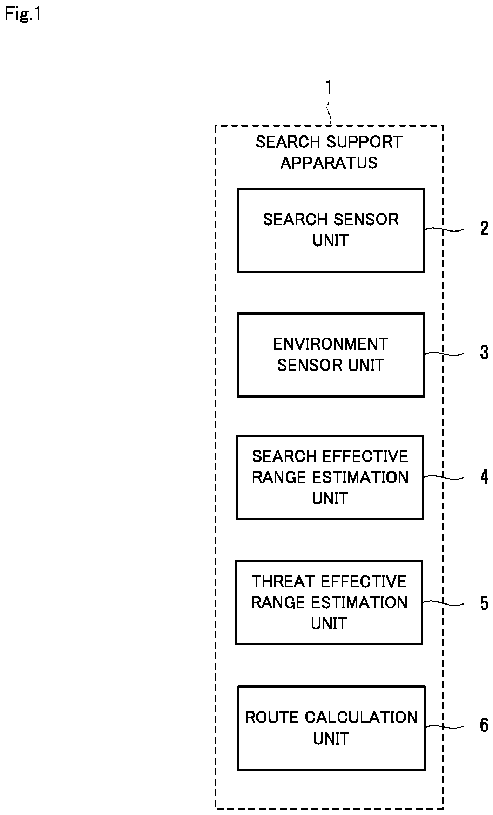

Below, Example embodiment 1 of the present invention will be described with reference to FIGS. 1 to 10.

### [Apparatus Configuration]

First, the configuration of a search support apparatus according to the present embodiment will be described with reference to FIG. 1. FIG. 1 is a diagram for showing an example of a search support apparatus.

The search support apparatus 1 according to the present embodiment shown in FIG. 1 is an apparatus that calculates a search route to an object position according to the surrounding environment and a target that is a threat. As shown in FIG. 1, the search support apparatus 1 includes a search sensor unit 2, an environment sensor unit 3, a search effective range estimation unit 4, a threat effective range estimation unit 5, and a route calculation unit 6. The object position may be a peripheral range including the object position.

Among these, the search sensor unit 2 searches for an object. The environment sensor unit 3 measures a surrounding environment and generates environment information based on measurement results. The search effective range estimation unit 4 estimates the search effective range of the search sensor unit 2 using the environment information and performance information that indicates the performance of the search sensor unit 2. The threat effective range estimation unit 5 estimates the search effective range of a sensor possessed by a target that is a threat using the environment information and performance information that indicates the performance of the sensor possessed by the target. The route calculation unit 6 calculates a search route to the object, based on the search effective range of the search sensor unit 2, the search effective range of the sensor possessed by the target, and a distribution of existence probabilities of the target that is a threat.

Thus, in the present embodiment, it is possible to calculate a search route to an object based on the search effective range of the search sensor unit 2, the search effective range of a sensor possessed by a target, and a distribution of existence probabilities of a target that is a threat. Therefore, for example, even in a case where a sensor that is easily affected by the surrounding environment is mounted in a vehicle, it is possible to calculate a search route to an object position according to the surrounding environment and a target that is a threat. Therefore, even when using a sensor that is mounted in a vehicle and is easily affected by the surrounding environment, it is possible to calculate a search route that is highly optimal for the purpose of a mission.

### [System Configuration]

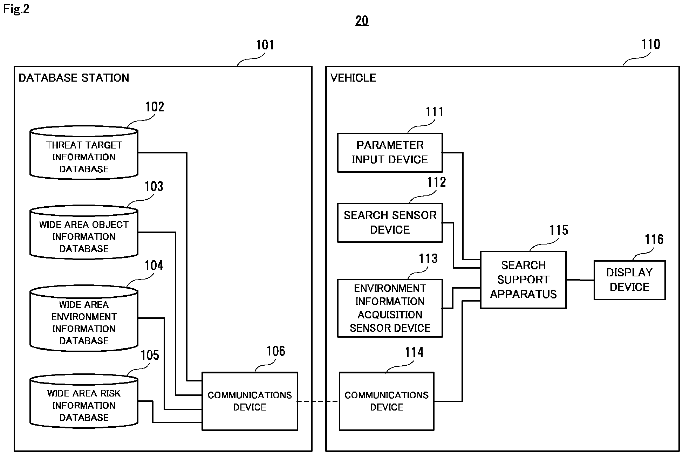

Next, the search support apparatus 1 according to the present embodiment, and a search support system 20 including the search support apparatus 1, will be specifically described with reference to FIG. 2. FIG. 2 is a diagram for showing an example of a search support system including a search support apparatus.

As shown in FIG. 2, the search support system 20 according to the present embodiment includes a database station 101 and a vehicle 110. The database station 101 is, for example, a facility for installing a database. The database station 101 includes a threat target information database 102, a wide area object information database 103, a wide area environment information database 104, a wide area risk information database 105, and a communications device 106.

The threat target information database 102 stores information indicating the performance of a sensor possessed by a target that is a threat. The wide area object information database 103 includes information indicating the existence of an object acquired from outside of the search support system 20. The wide area environment information database 104 includes environment information obtained by measuring the surrounding environment acquired from outside of the search support system 20. In other words, the environment information is information used to calculate sensor performance, or vehicle movement performance. The wide area risk information database 105 includes information indicating the existence of a target that is a threat acquired from outside of the search support system 20. The communications device 106 transmits the data included in these databases 102 to 105 through a communications device 114 of the vehicle 110.

The vehicle 110 is a movable vehicle. The vehicle 110 includes a parameter input device 111, a search sensor device 112 (the search sensor unit 2), an environment information acquisition sensor device 113 (the environment sensor unit 3), the communications device 114, a search support apparatus 115 (the search support apparatus 1 including the search effective range estimation unit 4, the threat effective range estimation unit 5, and the route calculation unit 6), and a display device 116.

The parameter input device 111 sets parameter values according to the purpose of a mission. The search sensor device 112 searches for an object set by the mission and generates object information regarding the object. The environment information acquisition sensor device 113 generates environment information used to calculate sensor performance, or vehicle movement performance. For example, the environment information is information about sensor capabilities or vehicle movement performance in the surroundings. The communications device 114 receives data from the database station 101 through the communications device 106. The search support apparatus 115 calculates a search route. The display device 116 displays the calculated search route.

Following is a specific description of a search support system.

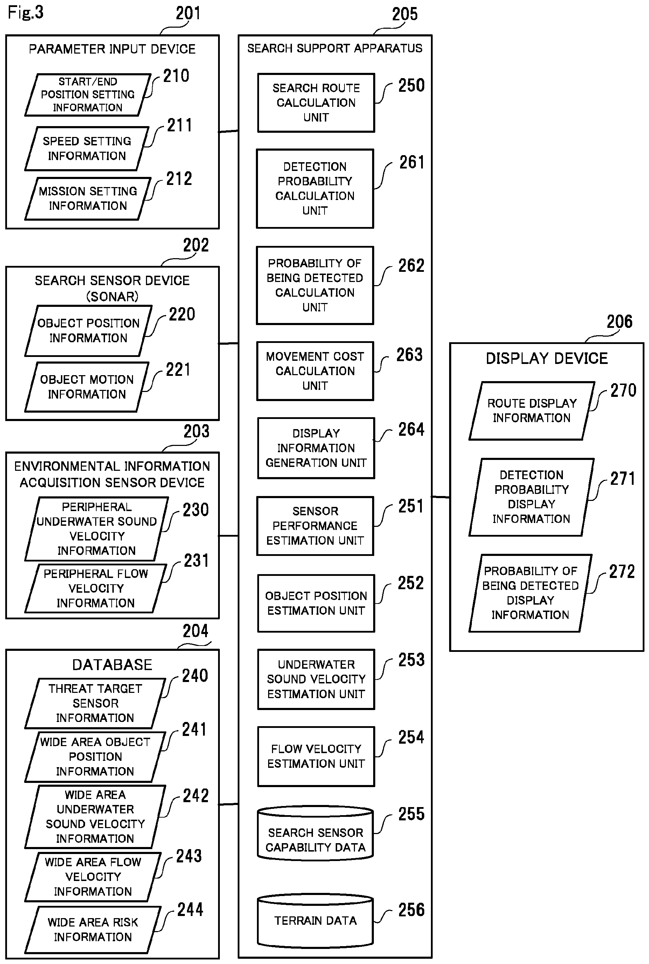

A case where the vehicle 110 is an on-water or underwater vehicle, and the search sensor device 112 is a sonar that performs sensing using sound waves, will be described with reference to FIG. 3. FIG. 3 is a diagram for specifically shows the search support system.

In FIG. 3, the vehicle 110 includes a parameter input device 201 (111), a search sensor device 202 (112: sonar), an environment information acquisition sensor device 203 (113), a database station 204 (101), a search support apparatus 205 (115), and a display device 206 (116).

The parameter input device 201 inputs start/end position setting information 210, speed setting information 211, and mission setting information 212 to the search support apparatus 205.

Specifically, the start/end position setting information 210 includes information indicating the start position and the end position of searching by the vehicle 110. The speed setting information 211 is information for setting the speed of the vehicle 110. Note that a plurality of setting values may be included. The mission setting information 212 is information including a requirement degree of an object detection probability, a requirement degree of a probability of being detected by a target that is a threat, and a requirement degree of a mission execution time with respect to the mission to be performed. The requirement degree is a value representing the degree of importance of each parameter in the mission to be performed, and is used as a weight in the calculation of the search route. For example, when a high value is set for the requirement degree of the object detection probability, and a low value is set for the requirement degree of the probability of being detected by a target that is a threat, a route is calculated such that it is easy to detect the object, but the vehicle 110 is likely to be detected by a target that is a threat.

The search sensor device 202 is a device that acquires sound wave information and performs signal processing, information processing, and the like on the acquired sound wave information. Also, the search sensor device 202 inputs object information (object position information 220, and object motion information 221) to the search support apparatus 205.

Specifically, the object position information 220 is information indicating the distribution and accuracy respectively of the position of a detected object. The object motion information 221 is information indicating the distribution of the movement direction and the movement speed of the object.

The environment information acquisition sensor device 203 outputs peripheral underwater sound velocity information 230 and peripheral flow velocity information 231 to the search support apparatus 205.

Specifically, the peripheral underwater sound velocity information 230 includes information indicating a water temperature acquired using an underwater sensor, information indicating a vertical profile of the underwater sound velocity calculated from electrical conductivity, and the like. The peripheral flow velocity information 231 is information indicating a velocity vector of peripheral water flow acquired using the underwater sensor.

The database station 204 sends threat target sensor performance information 240, wide area object position information 241, wide area underwater sound velocity information 242, wide area flow velocity information 243, and wide area risk information 244 to the search support apparatus 205 through the communications apparatus 106.

Specifically, the threat target sensor performance information 240 is information that is received from the database station 204 and that indicates the performance of a sensor possessed by a target that is a threat to the vehicle 110. The wide area object position information 241 is information indicating a distribution of object existence probabilities for the vehicle 110. The wide area underwater sound velocity information 242 is information indicating an underwater sound velocity distribution of the entire area searched in the mission. The wide area flow velocity information 243 is information indicating a flow velocity distribution of the entire area searched in the mission. The wide area risk information 244 is information indicating a distribution of existence probabilities of a target that is a threat.

The search support apparatus 205 uses the information acquired from the parameter input device 201, the search sensor device 202, the environment information acquisition sensor device 203, and the database station 204 to calculate route information, detection probability information, and probability of being detected information.

The search support apparatus 205 includes a search route calculation unit 250, a sensor performance estimation unit 251, an object position estimation unit 252, an underwater sound velocity estimation unit 253, a flow velocity estimation unit 254, search sensor capability data 255, and terrain data 256. Furthermore, the search support apparatus 205 includes a detection probability calculation unit 261, a probability of being detected calculation unit 262, a movement cost calculation unit 263, and a display information generation unit 264.

The search route calculation unit 250 searches a search route and calculates route information using information acquired from the sensor performance estimation unit 251 (the search effective range estimation unit 4 and the threat effective range estimation unit 5), the object position estimation unit 252, and the flow velocity estimation unit 254, the wide area risk information 244, and information of the terrain data 256.

Specifically, when a plurality of search condition parameters acquired from the parameter input device 201 are input, the search route calculation unit 250 selects one of the search condition parameters. Then, with respect to the selected search condition parameter, the search route calculation unit 250 calculates a range where the search route is used as the search target.

Note that, with respect to movement between the start position and the end position that have been set in the search condition parameters, when the speed of the vehicle 110 that has been set in the search condition parameters is used, the search route calculation unit 250 adopts only a range where it is possible to arrive within the mission execution time that has been set in the search condition parameters as the route search range.

Here, in a case where the vehicle 110 moves linearly at the set speed between the start position and the end position, and the mission execution time in the mission setting information is exceeded, it is determined that it is not possible to arrive with the selected conditions, so this is removed from the target range where a search is performed for a search route.

Next, the search route calculation unit 250 performs grid division processing, which will be described later, on the route search range in order to generate cells used in searching for the search route. Note that the grid interval may be a fixed value, or may be a variable value.

Next, the search route calculation unit 250 executes search route calculation processing on the interval from the start position to the end position set by the search condition parameters. Specifically, the search route calculation processing uses a Dijkstra method, an A* (A-Star) method, or the like, which are route search algorithms capable of setting individual movement costs for a search route. Here, the movement cost is a value indicating a virtual cost required for movement that depends on a requirement degree set in advance. In the present embodiment, calculation is performed based on the time required for movement, in consideration of the object detection probability and the probability of being detected by a target that is a threat. For example, when a high value is set for the requirement degree of the object detection probability, a route such that it is easy to detect the object has a lower movement cost. Also, when a high value is set for the requirement degree of the probability of being detected by a target that is a threat, a route such that the vehicle 110 is likely to be detected by a threat has a higher movement cost.

Also, the route information is information indicating a search route from a start position where a search is started to an end position where the search is ended. The detection probability information is information indicating a range in which it is possible for the vehicle 110 to detect the object that is the search target, and the probability of that detection. The probability of being detected information is information indicating a range in which the vehicle 110 can be detected by a target that is a threat, and the probability of being detected by that target.

The search effective range estimation unit 4 included in the sensor performance estimation unit 251 uses, for example, the input data acquired from the underwater sound velocity estimation unit 253, the search sensor capability data 255, and the terrain data 256 to estimate the sonar performance of the search sensor device 202 for the input data. Further, the threat effective range estimation unit 5 included in the sensor performance estimation unit 251 uses, for example, the input data acquired from the underwater sound velocity estimation unit 253, the threat target sensor performance information 240, and the terrain data 256 to estimate the sonar performance possessed by a target that is a threat for the input data.

Note that in a case where the performance of the search sensor device 202 changes depending on the speed of the vehicle 110, the sensor performance estimation unit 251 may acquire the speed setting information 211, add the acquired speed setting information 211, and then estimate the sonar performance.

The object position estimation unit 252 combines the input data acquired from the wide area object position information 241 in addition to the estimated position information of the object detected by the search sensor device 202 at a specified date and time calculated from the object position information 220 and the object motion information 221, and calculates a distribution of object existence probabilities for the wide area.

The underwater sound velocity estimation unit 253 calculates an estimated value of the underwater sound velocity distribution by correcting the wide area underwater sound velocity information 242 with the peripheral underwater sound velocity information 230.

The flow velocity estimation unit 254 calculates an estimated value of the flow velocity distribution by correcting the wide area flow velocity information 243 with the peripheral flow velocity information 231.

The detection probability calculation unit 261 estimates an arrival date and time to arrive at the estimated object position using the environment information, and estimates the distribution of object existence probabilities at the arrival date and time using the object information. Also, the detection probability calculation unit 261 estimates the environment of the estimated object position at the arrival date and time using the environment information, and calculates the object detection probability at the estimated object position at the arrival date and time, using the estimated distribution of object existence probabilities and the estimated environment of the object position.

Specifically, the detection probability calculation unit 261 first estimates the arrival date and time to arrive at the estimated object position and the movement time until arrival at the estimated object position, using environment information such as flow velocity information of the ocean current. Then, the detection probability calculation unit 261 calculates a distribution of object existence probabilities at the arrival date and time at the estimated object position, based on the object position estimated using the object position information 220 and the object motion information 221, and the wide area object position information 241. Also, by correcting the wide area underwater sound velocity information 242 with the peripheral underwater sound velocity information 230, the detection probability calculation unit 261 calculates an estimated value of the underwater sound velocity distribution at the arrival date and time, taking into consideration variations in the underwater sound velocity distribution. Then, the detection probability calculation unit 261 calculates the object detection probability using the estimated values of the distribution of object existence probabilities and the underwater sound velocity distribution at the arrival date and time, the search sensor capability data 255, and the terrain data 256.

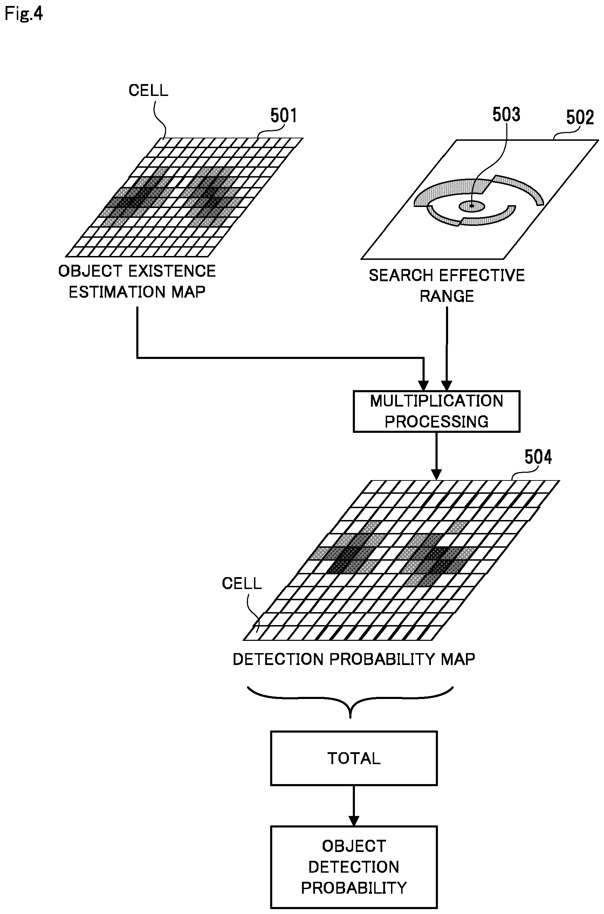

Calculation of the object detection probability will be further explained using FIG. 4. FIG. 4 is a diagram for explaining the object detection probability.

An object existence estimation map 501 shown in FIG. 4 is a map showing a distribution of object existence probabilities at an arrival date and time, in which the map is divided by a plurality of cells generated by grid division processing. As shown in FIG. 4, the darker the cell, the higher the probability of existence of the object.

A search effective range 502 indicates an effective range of the search sensor device 202 based on a center point 503 calculated using the estimated value of the underwater sound velocity distribution at the arrival date and time, the search sensor capability data 255, and the terrain data 256.

A detection probability map 504 shows information calculated by multiplying the values of the object existence estimation map 501 and the search effective range 502 for each position coordinate. An index value related to the object detection probability is calculated by adding the multiplication values of all of the cells shown in the detection probability map 504.

The probability of being detected calculation unit 262 estimates an arrival date and time to arrive at the estimated object position using the environment information, and estimates the distribution of object existence probabilities at the arrival date and time using the object information. In addition, the probability of being detected calculation unit 262 estimates the environment of the estimated object position at the arrival date and time using the environment information, and using the estimated distribution of object existence probabilities and the estimated environment of the object position, and using performance information that indicates the performance of the sensor possessed by the target that is a threat and the estimated environment of the object position, calculates a probability of being detected by the target that is a threat.

Specifically, the probability of being detected calculation unit 262, similar to the detection probability calculation unit 261, estimates the arrival date and time to arrive at the estimated object position, the movement time until arrival at the estimated object position, and a distribution of object existence probabilities at the arrival date and time at the estimated object position. Also, the probability of being detected calculation unit 262, similar to the detection probability calculation unit 261, calculates an estimated value of the underwater sound velocity distribution at the arrival date and time. Then, the probability of being detected calculation unit 262 calculates the probability of being detected by a target that is a threat using the estimated value of the underwater sound velocity distribution at the arrival date and time, the threat target sensor performance information 240, the wide area risk information 244, and the terrain data 256.

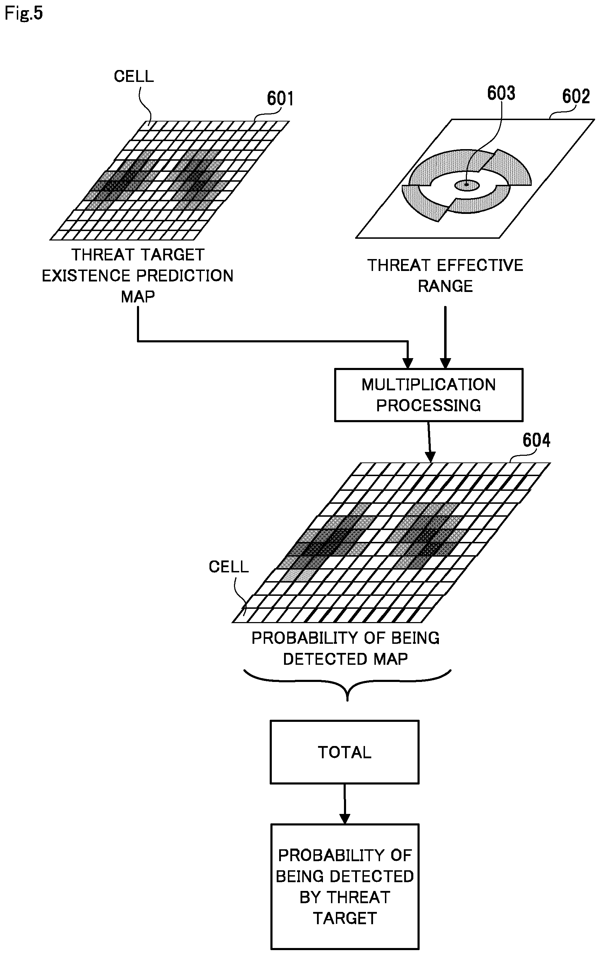

Calculation of the probability of being detected by a target that is a threat will be further explained with reference to FIG. 5. FIG. 5 is a diagram for explaining the probability of being detected by a target that is a threat.

A threat target existence prediction map 601 shown in FIG. 5 is a map showing a distribution of existence probabilities of a target that is a threat at an arrival date and time, in which the map is divided by a plurality of cells generated by grid division processing. The threat target existence prediction map 601 is generated using the wide area risk information 244. As shown in FIG. 5, the darker the cell, the higher the probability of existence of the target that is a threat.

A threat effective range 602 is an effective range where the vehicle 110 can be detected by a sensor possessed by the target that is a threat, based on a center point 603 calculated using the estimated value of the underwater sound velocity distribution at the arrival date and time, the threat target sensor performance information 240, and the terrain data 256.

A probability of being detected map 604 shows information calculated by multiplying the values of the threat target existence prediction map 601 and the threat effective range 602 for each position coordinate. An index value related to the probability of being detected by a target that is a threat is calculated by adding the multiplication values of all of the cells shown in the probability of being detected map 604.

The movement cost calculation unit 263 calculates a movement cost for a movement time to the estimated object position by multiplying a value obtained by multiplying the detection probability at the estimated object position by the requirement degree of the detection probability, by a value obtained by multiplying the probability of being detected at the estimated object position by the requirement degree of the probability of being detected.

Specifically, the movement cost calculation unit 263 calculates a multiplication value obtained by multiplying the estimated object detection probability by the requirement degree of the object detection probability that has been set in the search condition parameters, for the movement time to a cell including the estimated object position. Also, the movement cost calculation unit 263 calculates a multiplication value obtained by multiplying the probability of being detected by a target that is a threat by the requirement degree of the probability of being detected by a target that is a threat that has been set in the search condition parameters, for the movement time to the cell including the estimated object position. Then, the movement cost calculation unit 263 multiplies these multiplication values to calculate a movement cost for the movement time to the cell including the estimated object position.

The display information generation unit 264 generates display information for allowing the display device 206 to show displays corresponding to each of generated route information, detection probability information, and probability of being detected information. Specifically, the display information generation unit 264 generates route display information 270 for allowing the display device 206 to show a display regarding route information, detection probability display information 271 for allowing the display device 206 to show a display regarding detection probability information, and probability of being detected display information 272 for allowing the display device 206 to show a display regarding probability of being detected information, and transmits these to the display device 206.

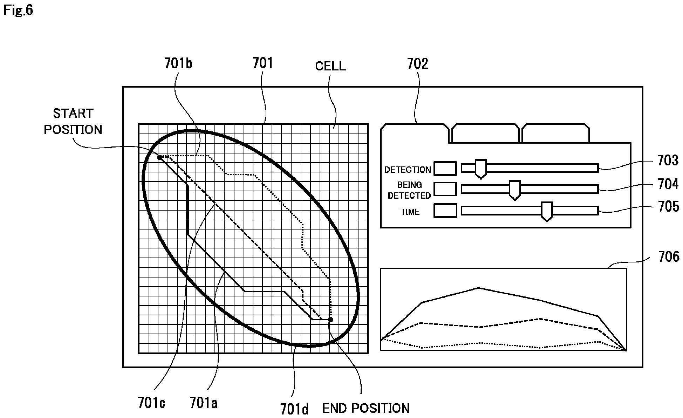

FIG. 6 is a diagram for showing an example of display of a search route. A route display unit 701 shown in FIG. 6 displays the calculation results of the plurality of search routes 701a, 701b, and 701c for respective search condition parameters, a route search target range 701d, and a route search grid (cell).

A search condition parameter setting screen 702 is a screen for setting search condition parameters, and in this screen a plurality of conditions can be set. An object detection probability requirement degree setting unit 703 is a user interface for setting the requirement degree for the detection probability, which is a weight for the object detection probability in the route search. The requirement degree may be, for example, numerical value input, or may be set using a slide bar or the like. A probability of being detected requirement degree setting unit 704 is a user interface for setting the requirement degree for the probability of being detected, which is a weight for the probability of being detected by a target that is a threat in the route search. A mission execution time requirement value setting unit 705 is a user interface for inputting a mission execution time requirement value. The requirement degree and the requirement value may be, for example, numerical value input, or may be set using a slide bar or the like.

A detection probability/probability of being detected display unit 706 displays a graph of the transition of the probability of detection of the object by the search sensor device 202, or a graph that indicates the transition of the probability of being detected by a target that is a threat, when the optimum search route for each search condition parameter is selected.

### (Modified Examples)

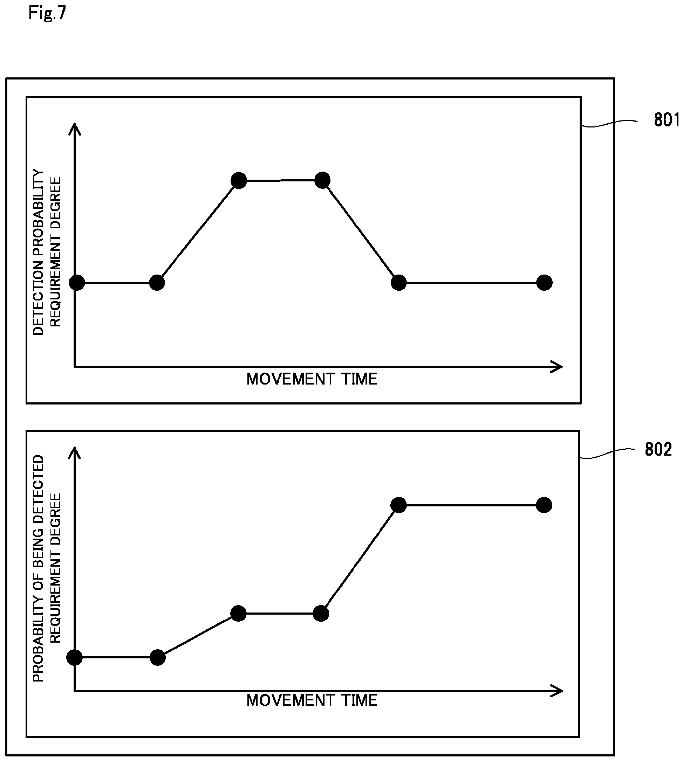

The parameter input device 201 inputs one requirement degree for the detection probability and one requirement degree for the probability of being detected respectively for each search condition. However, in a case where the requirement degree for the detection probability and the requirement degree for the probability of being detected vary within the mission period (movement time), as shown in FIG. 7, the requirement degrees (the detection probability requirement degree and the probability of being detected requirement degree) may be set in a manner updated over time. FIG. 7 is a diagram for showing variations in the detection probability requirement degree and the probability of being detected requirement degree.

The requirement degree, which varies over time, indicates that the importance of each parameter in the mission to be performed changes with time. For example, in a case where immediately after the start of the mission, detection by a target that is a threat is a problem, but after a certain period of time, being detected is no longer a problem, a high value is set for the probability of being detected requirement degree at a time immediately after the start of the mission, and a low value is set for this requirement degree after a certain period of time. In this case, values at the date and time of arrival at the position where the movement cost is calculated are used for the requirement degrees (the detection probability requirement degree and the probability of being detected requirement degree) used in calculating the movement cost.

### [Apparatus Operation]

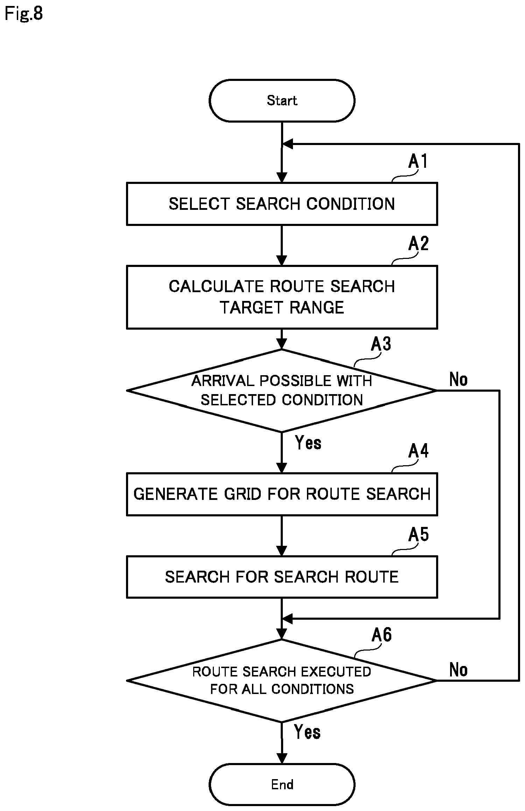

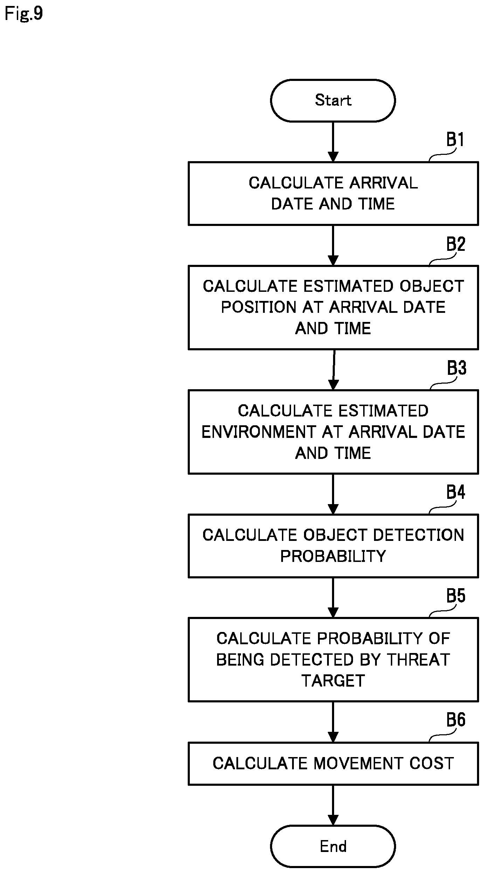

Next, operation of a search support apparatus according to an example embodiment of the present invention will be described with reference to FIGS. 8 and 9. FIG. 8 is a diagram for showing an example of operation to calculate a search route. FIG. 9 is a diagram for showing an example of operation to calculate a movement cost. In the following description, FIGS. 1 to 6 will be referred to as appropriate. Further, in the present embodiment, a search support method is implemented by operating the search support apparatus. Therefore, the description of the search support method in the present embodiment is replaced with the following description of the operation of the search support apparatus.

Next, operation to calculate a search route will be described.

In step A1 (search condition selection), when a plurality of search condition parameters are input from the parameter input device 201, the search route calculation unit 250 selects one of those search condition parameters.

In step A2 (route search target range calculation), the search route calculation unit 250 calculates a range to be a route search target. With respect to movement between the start position and the end position that have been set in the search condition parameters, when using the speed of the vehicle 110 that has been set in the search condition parameters, the search route calculation unit 250 adopts only a range where it is possible to arrive within the mission execution time that has been set in the search condition parameters as the route search range.

In step A3, the search route calculation unit 250 determines whether or not the vehicle 110 can arrive at the end position under the selected condition. In a case where the vehicle 110 linearly moves between the start position and the end position at a set speed, when the movement time of the vehicle 110 exceeds the mission execution time (arrival date and time) set by the mission setting information (step A3: No), it is determined that the vehicle 110 cannot arrive at the end position under the selected condition, and this range is not used for the target range in a subsequent route search.

Next, when the movement time of the vehicle 110 does not exceed the mission execution time (arrival date and time)(step A3: Yes), in step A4 (route search grid generation), the search route calculation unit 250 executes grid division processing for the route search range.

In step A5 (route search), the search route calculation unit 250 executes route search processing on the interval between the start position and the end position set in the search condition parameters. For example, the route search processing uses a Dijkstra method, an A* (A-Star) method, or the like, which are route search algorithms capable of setting individual movement costs for a route. Note that the movement cost between cells is calculated using a method in which weighting is performed according to the search condition parameters shown in FIG. 4.

In step A6, the search route calculation unit 250 determines whether or not the search route has been calculated for all of the search condition parameters input that have been from the parameter input device 201. When the search route has not been calculated for all of the search condition parameters (step A6: No), the search route calculation unit 250 executes the search route calculation for a next search condition parameter. When the search route has not been calculated for all of the search condition parameters (step A6: Yes), the search route calculation unit 250 ends the search route calculation processing.

Next, operation to calculate a movement cost will be described.

In step B1 (calculation of the arrival time at the target cell), the detection probability calculation unit 261 or the probability of being detected calculation unit 262 calculates the movement time of the vehicle 110 from a cell serving as a moving cost reference to an adjacent cell that is the target of the movement cost calculation, using ocean current flow velocity information or the like.

In step B2 (calculation of the estimated object position at the arrival date and time at the target cell), the detection probability calculation unit 261 or the probability of being detected calculation unit 262 calculates a distribution of object existence probabilities at the arrival date and time at the target cell, based on the object position information 220 and the wide area object position information 241.

In step B3 (calculation of the estimated environment at the arrival date and time at the target cell), the detection probability calculation unit 261 or the probability of being detected calculation unit 262 calculates an estimated value of the underwater sound velocity distribution at the arrival date and time at the target cell by correcting the wide area underwater sound velocity information 242 with the peripheral underwater sound velocity information 230. Note that the sequence of processing of step B2 and step B3 is not limited.

In step B4 (calculation of the probability of object detection by the on-board sensor at the target cell), the detection probability calculation unit 261 calculates the object detection probability at the target cell using the estimated values of the distribution of object existence probabilities and the underwater sound velocity distribution at the arrival date and time at the target cell, the search sensor capability data 255, and the terrain data 256. See FIG. 5.

In step B5 (calculation of the probability of being detected by a target that is a threat at the target cell), the probability of being detected calculation unit 262 calculates the probability of being detected by a target that is a threat at the target cell, using the estimated value of the underwater sound velocity distribution at the arrival date and time at the target cell, the threat target sensor performance information 240, the wide area risk information 244, and the terrain data 256. See FIG. 6. Note that the sequence of processing of step B4 and step B5 is not limited.

In step B6 (calculation of a weighted cost of movement to the target cell), the movement cost calculation unit 263 calculates a multiplication value obtained by multiplying the object detection probability at the target cell by the requirement degree of the object detection probability that has been set using the search condition parameters, for the movement time between cells. Also, the movement cost calculation unit 263 calculates a multiplication value obtained by multiplying the probability of being detected by a target that is a threat at the target cell by the requirement degree of the probability of being detected by a target that is a threat that has been set using the search condition parameters. Then, the movement cost calculation unit 263 multiplies those multiplication values to calculate a cost of movement to the target cell.

### [Effects of Embodiment]

As described above, according to the present embodiment, it is possible to calculate a search route to an object based on the search effective range of the search sensor unit 2, the search effective range of a sensor possessed by a target, and a distribution of existence probabilities of a target that is a threat. Therefore, for example, even in a case where a sensor that is easily affected by the surrounding environment is mounted in a vehicle, it is possible to calculate a search route to an object position according to the surrounding environment and a target that is a threat. Therefore, even when using a sensor that is mounted in a vehicle and is easily affected by the surrounding environment, it is possible to calculate a search route that is highly optimal for the purpose of a mission.

Also, in the present embodiment, presentation of a search route to an operator in a manned vehicle is described, but the search support apparatus 1 may also be applied to an unmanned vehicle such as an unmanned underwater vehicle or an unmanned surface vehicle.

Furthermore, when the search support apparatus 1 is installed in an unmanned vehicle, the search support apparatus 1 may store search condition parameters that have been assigned a priority ranking in advance, and execute search route search processing using those search condition parameters. After executing the search route search processing, the search support apparatus 1 can select the search route that has the highest priority and use the selected search route to judge action of the unmanned aerial vehicle.

### [Program]

The program according to an embodiment of the present invention may be a program that causes a computer to execute steps A1 to A6 shown in FIG. 8, or may be a program that causes a computer to execute steps B1 to B6 shown in FIG. 9. Also, the program according to an embodiment of the present invention may be a program that causes the display device 206 to display information. By installing this program in a computer and executing the program, the search support apparatus and the search support method according to the example embodiment can be realized.

Further, the processor of the computer performs processing to function as the search path calculation unit 250, the sensor performance estimation unit 251, the object position estimation unit 252, the underwater sound velocity estimation unit 253, the flow velocity estimation unit 254, the detection probability calculation unit 261, the probability of being detected calculation unit 262, the movement cost calculation unit 263, and the display information generation unit 264.

Also, the program according to the present embodiment may be executed by a computer system constructed by a plurality of computers. In this case, for example, each computer may function as any of the search path calculation unit 250, the sensor performance estimation unit 251, the object position estimation unit 252, the underwater sound velocity estimation unit 253, the flow velocity estimation unit 254, the detection probability calculation unit 261, the probability of being detected calculation unit 262, the movement cost calculation unit 263, and the display information generation unit 264.

### [Physical Configuration]

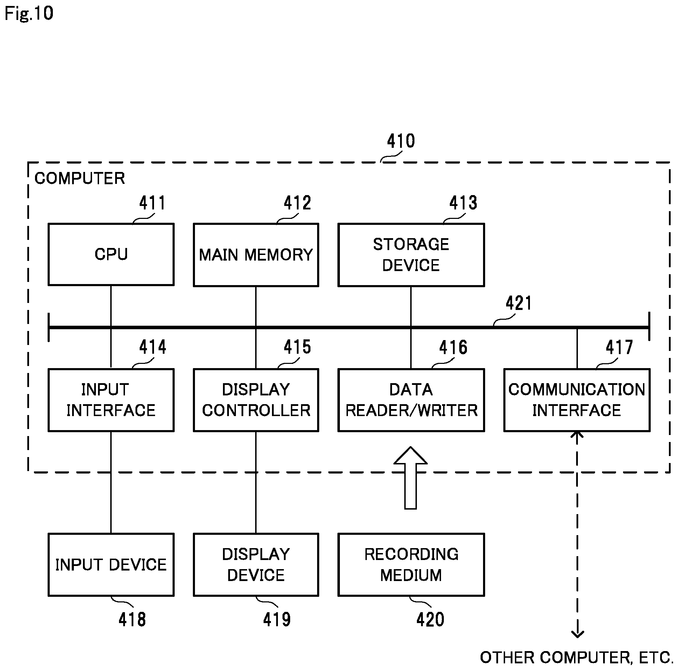

Here, a computer that realizes a search support apparatus by executing the program according to an example embodiment will be described with reference to FIG. 10. FIG. 10 is a block diagram showing an example of a computer that realizes the search support apparatus according to an example embodiment of the present invention.

As shown in FIG. 10, a computer 410 includes a CPU (Central Processing Unit) 411, a main memory 412, a storage device 413, an input interface 414, a display controller 415, a data reader/writer 416, and a communications interface 417. These units are each connected so as to be capable of performing data communications with each other through a bus 421. Note that the computer 410 may include a GPU (Graphics Processing Unit) or an FPGA (Field-Programmable Gate Array) in addition to the CPU 411 or in place of the CPU 411.

The CPU 411 opens the program (code) according to this example embodiment, which has been stored in the storage device 413, in the main memory 412 and performs various operations by executing the program in a predetermined order. The main memory 412 is typically a volatile storage device such as a DRAM (Dynamic Random Access Memory). Also, the program according to this example embodiment is provided in a state being stored in a computer-readable recording medium 420. Note that the program according to this example embodiment may be distributed on the Internet, which is connected through the communications interface 417.

Also, other than a hard disk drive, a semiconductor storage device such as a flash memory can be given as a specific example of the storage device 413. The input interface 414 mediates data transmission between the CPU 411 and an input device 418, which may be a keyboard or mouse. The display controller 415 is connected to a display device 419, and controls display on the display device 419.

The data reader/writer 416 mediates data transmission between the CPU 411 and the recording medium 420, and executes reading of a program from the recording medium 420 and writing of processing results in the computer 410 to the recording medium 420. The communications interface 417 mediates data transmission between the CPU 411 and other computers.

Also, general-purpose semiconductor storage devices such as CF (Compact Flash (registered trademark)) and SD (Secure Digital), a magnetic recording medium such as a Flexible Disk, or an optical recording medium such as a CD-ROM (Compact Disk Read-Only Memory) can be given as specific examples of the recording medium 420.

Also, instead of a computer in which a program is installed, the search support apparatus 1 according to this example embodiment can also be realized by using hardware corresponding to each unit. Furthermore, a portion of the search support apparatus 1 may be realized by a program, and the remaining portion realized by hardware.

### INDUSTRIAL APPLICABILITY

As described above, according to the present invention, it is possible to calculate a search route to an object position according to the surrounding environment and a target that is a threat. The present invention is useful in fields where it is necessary to calculate a search route.

### REFERENCE SIGNS LIST

- 1: Search support apparatus
- 2: Search sensor unit
- 3: Environment sensor unit
- 4: Search effective range estimation unit
- 5: Threat effective range estimation unit
- 6: Route calculation unit
- 20: Search support system
- 101: Database station
- 102: Threat target information database
- 103: Wide area object information database
- 104: Wide area environment information database
- 105: Wide area risk information database
- 106: Communications device
- 110: Vehicle
- 111: Parameter input device
- 112: Search sensor device
- 113: Environment information acquisition sensor device
- 114: Communications device
- 115: Search support apparatus
- 116: Display device
- 201: Parameter input device
- 202: Search sensor device
- 203: Environment information acquisition sensor device
- 204: Database station
- 205: Search support apparatus
- 206: Display device
- 410: Computer
- 411: CPU
- 412: Main memory
- 413: Storage device
- 414: Input interface
- 415: Display controller
- 416: Data reader/writer
- 417: Communications interface
- 418: Input device
- 419: Display device
- 420: Recording medium
- 421: Bus

## Claims

1. A search support apparatus (1), comprising:
a search sensor means (2) for searching for an object;
an environment sensor means (3) for measuring a surrounding environment and generate environment information based on measurement results;
a search effective range estimation means (4) for estimating the search effective range of the search sensor means using the environment information and performance information that indicates the performance of the search sensor means for searching the object; the search support apparatus further comprising:
a threat effective range estimation means (5) for estimating the search effective range of a sensor possessed by a target that is a threat using the environment information and performance information that indicates the performance of the sensor possessed by the target; and
a route calculation means (6) for calculating a search route to the object, based on the search effective range of the search sensor means, the search effective range of the sensor possessed by the target, and a distribution of existence probabilities of the target that is a threat.

2. The search support apparatus according to claim 1,
a search sensor means (2) generates, with respect to the object, object information including an estimated object position, an existence probability distribution, a movement direction, and a movement speed, and
the route calculation means (6) calculates a search route to the object based on the object information.

3. The search support apparatus according to claim 2, comprising:
a detection probability calculation means (261) for estimating an arrival date and time to arrive at the object position estimated using the environment information, estimate a distribution of object existence probabilities at the arrival date and time using the object information, estimate an environment of the estimated object position at the arrival date and time using the environment information, and using the estimated distribution of object existence probabilities and the estimated environment of the object position, calculate a probability of detecting the object at the arrival date and time at the estimated object position.

4. The search support apparatus according to claim 3, comprising:
a probability of being detected calculation means (262) for estimating an arrival date and time to arrive at the object position estimated using the environment information, estimate a distribution of object existence probabilities at the arrival date and time using the object information, estimate an environment of the estimated object position at the arrival date and time using the environment information, and using the estimated distribution of object existence probabilities and the estimated environment of the object position, and using performance information that indicates the performance of the sensor possessed by the target that is a threat and the estimated environment of the object position, calculate a probability of being detected by the target that is a threat.

5. The search support apparatus according to claim 4, comprising:
a movement cost calculation means (263) for calculating a movement cost for a movement time to the estimated object position by multiplying a value obtained by multiplying the detection probability at the estimated object position by a requirement degree of the detection probability, by a value obtained by multiplying the probability of being detected at the estimated object position by a requirement degree of the probability of being detected.

6. The search support apparatus according to claim 5, comprising:
a display information generation means (264) for generating display information for displaying the search route, the detection probability, the probability of being detected, or a combination thereof.

7. A search support method, comprising:
(a) a step of estimating a search effective range of a search sensor unit configured to search for an object, using environment information generated based on measurement results obtained by measuring a surrounding environment with an environment sensor unit and performance information that indicates the performance of the search sensor unit; the search support method further comprising:
(b) a step of estimating the search effective range of a sensor possessed by a target that is a threat using the environment information and performance information that indicates the performance of the sensor possessed by the target; and
(c) a step of calculating a search route to the object, based on the search effective range of the search sensor unit, the search effective range of the sensor possessed by the target, and a distribution of existence probabilities of the target that is a threat.

8. The search support method according to claim 7,
wherein in the processing of the (c) step, a search route to the object is calculated based on object information including an estimated object position, an existence probability distribution, a movement direction, and a movement speed generated by the search sensor unit with respect to the object.

9. The search support method according to claim 8, comprising:
(d) a step of estimating an arrival date and time to arrive at the object position estimated using the environment information, estimating a distribution of object existence probabilities at the arrival date and time using the object information, estimating an environment of the estimated object position at the arrival date and time using the environment information, and using the estimated distribution of object existence probabilities and the estimated environment of the object position, calculating a probability of detecting the object at the arrival date and time at the estimated object position.

10. The search support method according to claim 9, comprising:
(e) a step of estimating an arrival date and time to arrive at the object position estimated using the environment information, estimating a distribution of object existence probabilities at the arrival date and time using the object information, estimating an environment of the estimated object position at the arrival date and time using the environment information, and using the estimated distribution of object existence probabilities and the estimated environment of the object position, and using performance information that indicates the performance of the sensor possessed by the target that is a threat and the estimated environment of the object position, calculating a probability of being detected by the target that is a threat.

11. The search support method according to claim 10, comprising:
(f) a step of calculating a movement cost for a movement time to the estimated object position by multiplying a value obtained by multiplying the detection probability at the estimated object position by a requirement degree of the detection probability, by a value obtained by multiplying the probability of being detected at the estimated object position by a requirement degree of the probability of being detected.

12. The search support method according to claim 11, comprising:
(g) a step of generating display information for displaying the search route, the detection probability, the probability of being detected, or a combination thereof.

13. A computer program comprising instructions which when executed by a processor cause the processor to perform the method any of claims 7 to 12.

## Patentansprüche

1. Eine Suchunterstützungsvorrichtung (1), umfassend:
eine Such-Sensoreinrichtung (2) zur Suche nach einem Objekt;
eine Umgebungssensoreinrichtung (3) zum Messen einer umgebenden Umgebung und zum Erzeugen von Umgebungsinformationen auf der Grundlage von Messergebnissen;
eine Einrichtung (4) zum Schätzen der effektiven Suchreichweite der Such-Sensoreinrichtung unter Verwendung der Umgebungsinformation und von Leistungsinformation, die die Leistung der Such-Sensoreinrichtung zum Suchen des Objekts angibt; wobei die Suchunterstützungsvorrichtung ferner umfasst
ein Mittel (5) zur Abschätzung der effektiven Reichweite einer Bedrohung, um die effektive Suchreichweite eines Sensors abzuschätzen, der sich im Besitz eines Ziels befindet, das eine Bedrohung darstellt, unter Verwendung der Umgebungsinformationen und der Leistungsinformationen, die die Leistung des Sensors anzeigen, der sich im Besitz des Ziels befindet; und
eine Routenberechnungseinrichtung (6) zum Berechnen einer Suchroute zu dem Objekt auf der Grundlage der effektiven Suchreichweite der Such-Sensoreinrichtung, der effektiven Suchreichweite des Sensors, den das Ziel besitzt, und einer Verteilung von Vorhandenseinswahrscheinlichkeiten des Ziels, das eine Bedrohung ist.

2. Die Suchunterstützungsvorrichtung nach Anspruch 1,
eine Such-Sensoreinrichtung (2) erzeugt in Bezug auf das Objekt eine Objektinformation, die eine geschätzte Objektposition, eine Vorhandenseinswahrscheinlichkeitsverteilung, eine Bewegungsrichtung und eine Bewegungsgeschwindigkeit umfasst, und
die Routenberechnungseinrichtung (6) berechnet eine Suchroute zu dem Objekt auf der Grundlage der Objektinformationen.

3. Suchunterstützungsvorrichtung nach Anspruch 2, umfassend:
eine Erfassungswahrscheinlichkeitsberechnungseinrichtung (261) zum Schätzen eines Ankunftsdatums und einer Ankunftszeit an der unter Verwendung der Umgebungsinformationen geschätzten Objektposition, zum Schätzen einer Verteilung von
Objektvorhandenseinswahrscheinlichkeiten zu dem Ankunftsdatum und der Ankunftszeit unter Verwendung der Objektinformationen, zum Schätzen einer Umgebung der geschätzten Objektposition zu dem Ankunftsdatum und der Ankunftszeit unter Verwendung der Umgebungsinformationen, und zum Berechnen einer Erfassungswahrscheinlichkeit des Objekts zu dem Ankunftsdatum und der Ankunftszeit an der geschätzten Objektposition unter Verwendung der geschätzten Verteilung von Objektvorhandenseinswahrscheinlichkeiten und der geschätzten Umgebung der Objektposition.

4. Suchunterstützungsvorrichtung nach Anspruch 3, umfassend:
eine Berechnungseinrichtung (262) für die Wahrscheinlichkeit, entdeckt zu werden, zum Schätzen eines Ankunftsdatums und einer Ankunftszeit an der unter Verwendung der Umgebungsinformationen geschätzten Objektposition, zum Schätzen einer Verteilung von Objektvorhandenseinswahrscheinlichkeiten zu dem Ankunftsdatum und der Ankunftszeit unter Verwendung der Objektinformationen, zum Schätzen einer Umgebung der geschätzten Objektposition zu dem Ankunftsdatum und der Ankunftszeit unter Verwendung der Umgebungsinformationen, und unter Verwendung der geschätzten Verteilung der Objektvorhandenseinswahrscheinlichkeiten und der geschätzten Umgebung der Objektposition und unter Verwendung von Leistungsinformationen, die die Leistung des Sensors angeben, den das Ziel, das eine Bedrohung darstellt, besitzt, und der geschätzten Umgebung der Objektposition, eine Wahrscheinlichkeit zu berechnen, von dem Ziel, das eine Bedrohung darstellt, entdeckt zu werden.

5. Die Suchunterstützungsvorrichtung nach Anspruch 4, umfassend:
eine Bewegungskostenberechnungseinrichtung (263) zum Berechnen von Bewegungskosten für eine Bewegungszeit zu der geschätzten Objektposition durch Multiplizieren eines Wertes, der durch Multiplizieren der Erfassungswahrscheinlichkeit an der geschätzten Objektposition mit einem Anforderungsgrad der Erfassungswahrscheinlichkeit erhalten wird, mit einem Wert, der durch Multiplizieren der Wahrscheinlichkeit, an der geschätzten Objektposition erfasst zu werden, mit einem Anforderungsgrad der Wahrscheinlichkeit, erfasst zu werden, erhalten wird.

6. Suchunterstützungsvorrichtung nach Anspruch 5, umfassend:
eine Anzeigeinformations-Erzeugungseinrichtung (264) zum Erzeugen von Anzeigeinformationen zum Anzeigen der Suchroute, der Erfassungswahrscheinlichkeit, der Wahrscheinlichkeit, erfasst zu werden, oder einer Kombination davon.

7. Suchunterstützungsverfahren, umfassend:
(a) einen Schritt des Schätzens eines effektiven Suchbereichs einer Such-Sensoreinheit, die konfiguriert ist, um nach einem Objekt zu suchen, unter Verwendung von Umgebungsinformationen, die auf der Grundlage von Messergebnissen erzeugt werden, die durch Messen einer umgebenden Umgebung mit einer Umgebungssensoreinheit erhalten werden, und von Leistungsinformationen, die die Leistung der Such-Sensoreinheit anzeigen; wobei das Suchunterstützungsverfahren ferner umfasst:
(b) einen Schritt des Schätzens der effektiven Suchreichweite eines Sensors, der sich im Besitz eines Ziels befindet, das eine Bedrohung darstellt, unter Verwendung der Umgebungsinformationen und der Leistungsinformationen, die die Leistung des Sensors anzeigen, der sich im Besitz des Ziels befindet; und
(c) einen Schritt des Berechnens einer Suchroute zu dem Objekt, basierend auf der effektiven Suchreichweite der Such-Sensoreinheit, der effektiven Suchreichweite des Sensors, den das Ziel besitzt, und einer Verteilung von Vorhandenseinswahrscheinlichkeiten des Ziels, das eine Bedrohung ist.

8. Suchunterstützungsverfahren nach Anspruch 7,
wobei bei der Verarbeitung des Schritts (c) eine Suchroute zu dem Objekt auf der Grundlage von Objektinformationen einschließlich einer geschätzten Objektposition, einer Vorhandenseinswahrscheinlichkeitsverteilung, einer Bewegungsrichtung und einer Bewegungsgeschwindigkeit berechnet wird, die von der Such-Sensoreinheit in Bezug auf das Objekt erzeugt werden.

9. Suchunterstützungsverfahren nach Anspruch 8, umfassend:
(d) einen Schritt des Schätzens eines Ankunftsdatums und einer Ankunftszeit an der unter Verwendung der Umgebungsinformationen geschätzten Objektposition, des Schätzens einer Verteilung von Objektvorhandenseinswahrscheinlichkeiten zu dem Ankunftsdatum und der Ankunftszeit unter Verwendung der Objektinformationen, des Schätzens einer Umgebung der geschätzten Objektposition zu dem Ankunftsdatum und der Ankunftszeit unter Verwendung der Umgebungsinformationen, und des Berechnens einer Wahrscheinlichkeit des Erkennens des Objekts zu dem Ankunftsdatum und der Ankunftszeit an der geschätzten Objektposition unter Verwendung der geschätzten Verteilung von Objektvorhandenseinswahrscheinlichkeiten und der geschätzten Umgebung der Objektposition.

10. Suchunterstützungsverfahren nach Anspruch 9, umfassend:
(e) einen Schritt des Schätzens eines Ankunftsdatums und einer Ankunftszeit an der unter Verwendung der Umgebungsinformationen geschätzten Objektposition, des Schätzens einer Verteilung von Objektvorhandenseinswahrscheinlichkeiten zu dem Ankunftsdatum und der Ankunftszeit unter Verwendung der Objektinformationen, des Schätzens einer Umgebung der geschätzten Objektposition zu dem Ankunftsdatum und der Ankunftszeit unter Verwendung der Umgebungsinformationen und des Verwendens der geschätzten Verteilung von Objektvorhandenseinswahrscheinlichkeiten und der geschätzten Umgebung der Objektposition und des Verwendens von Leistungsinformationen, die die Leistung des Sensors anzeigen, den das Ziel, das eine Bedrohung ist, besitzt, und der geschätzten Umgebung der Objektposition, wobei eine Wahrscheinlichkeit berechnet wird, von dem Ziel, das eine Bedrohung ist, erkannt zu werden.

11. Suchunterstützungsverfahren nach Anspruch 10, umfassend:
(f) einen Schritt zum Berechnen von Bewegungskosten für eine Bewegungszeit zu der geschätzten Objektposition durch Multiplizieren eines Wertes, der durch Multiplizieren der Erfassungswahrscheinlichkeit an der geschätzten Objektposition mit einem Anforderungsgrad der Erfassungswahrscheinlichkeit erhalten wird, mit einem Wert, der durch Multiplizieren der Wahrscheinlichkeit, an der geschätzten Objektposition erfasst zu werden, mit einem Anforderungsgrad der Erfassungswahrscheinlichkeit erhalten wird.

12. Suchunterstützungsverfahren nach Anspruch 11, umfassend:
(g) einen Schritt des Erzeugens von Anzeigeinformationen zum Anzeigen der Suchroute, der Erfassungswahrscheinlichkeit, der Wahrscheinlichkeit, erfasst zu werden, oder einer Kombination davon.

13. Computerprogramm mit Anweisungen, die, wenn sie von einem Prozessor ausgeführt werden, den Prozessor veranlassen, das Verfahren nach einem der Ansprüche 7 bis 12 durchzuführen.

## Revendications

1. Appareil de support à la recherche (1), comprenant :
un moyen de capteur de recherche (2) pour rechercher un objet ;
un moyen de capteur d'environnement (3) pour mesurer un environnement ambiant et générer des informations d'environnement sur la base de résultats de mesure ;
un moyen d'estimation de plage efficace de recherche (4) pour estimer la plage efficace de recherche du moyen de capteur de recherche en utilisant les informations d'environnement et des informations de performances qui indiquent les performances du moyen de capteur de recherche pour rechercher l'objet ; l'appareil de support à la recherche comprenant en outre :
un moyen d'estimation de plage efficace de menace (5) pour estimer la plage efficace de recherche d'un capteur possédé par une cible qui est une menace en utilisant les informations d'environnement et des informations de performances qui indiquent les performances du capteur possédé par la cible ; et
un moyen de calcul de route (6) pour calculer une route de recherche jusqu'à l'objet, sur la base de la plage efficace de recherche du moyen de capteur de recherche, de la plage efficace de recherche du capteur possédé par la cible et d'une distribution de probabilités d'existence de la cible qui est une menace.

2. Appareil de support à la recherche selon la revendication 1,
un moyen de capteur de recherche (2) génère, par rapport à l'objet, des informations d'objet comportant une position d'objet estimée, une distribution de probabilités d'existence, une direction de déplacement et une vitesse de déplacement, et
le moyen de calcul de route (6) calcule une route de recherche jusqu'à l'objet sur la base des informations d'objet.

3. Appareil de support à la recherche selon la revendication 2, comprenant :
un moyen de calcul de probabilité de détection (261) pour estimer une date et une heure d'arrivée pour arriver à la position d'objet estimée en utilisant les informations d'environnement, estimer une distribution de probabilités d'existence d'objet à la date et l'heure d'arrivée en utilisant les informations d'objet, estimer un environnement de la position d'objet estimée à la date et l'heure d'arrivée en utilisant les informations d'environnement, et en utilisant la distribution estimée de probabilités d'existence d'objet et l'environnement estimé de la position d'objet, calculer une probabilité de détection de l'objet à la date et l'heure d'arrivée à la position d'objet estimée.

4. Appareil de support à la recherche selon la revendication 3, comprenant :
un moyen de calcul de probabilité d'être détecté (262) pour estimer une date et une heure d'arrivée pour arriver à la position d'objet estimée en utilisant les informations d'environnement, estimer une distribution de probabilités d'existence d'objet à la date et l'heure d'arrivée en utilisant les informations d'objet, estimer un environnement de la position d'objet estimée à la date et l'heure d'arrivée en utilisant les informations d'environnement, et en utilisant la distribution estimée de probabilités d'existence d'objet et l'environnement estimé de la position d'objet, et en utilisant des informations de performances qui indiquent les performances du capteur possédé par la cible qui est une menace et l'environnement estimé de la position d'objet, calculer une probabilité d'être détecté par la cible qui est une menace.

5. Appareil de support à la recherche selon la revendication 4, comprenant :
un moyen de calcul de coût de déplacement (263) pour calculer un coût de déplacement pour un temps de déplacement jusqu'à la position d'objet estimée en multipliant une valeur obtenue en multipliant la probabilité de détection à la position d'objet estimée par un degré d'exigence de la probabilité de détection, par une valeur obtenue en multipliant la probabilité d'être détecté à la position d'objet estimée par un degré d'exigence de la probabilité d'être détecté.

6. Appareil de support à la recherche selon la revendication 5, comprenant :
un moyen de génération d'informations d'affichage (264) pour générer des informations d'affichage pour afficher la route de recherche, la probabilité de détection, la probabilité d'être détecté ou une combinaison de celles-ci.

7. Procédé de support à la recherche, comprenant :
(a) une étape d'estimation d'une plage efficace de recherche d'une unité de capteur de recherche configurée pour rechercher un objet, en utilisant des informations d'environnement générées sur la base de résultats de mesure obtenus en mesurant un environnement ambiant avec une unité de capteur d'environnement et des informations de performances qui indiquent les performances de l'unité de capteur de recherche ; le procédé de support à la recherche comprenant en outre :
(b) une étape d'estimation de la plage efficace de recherche d'un capteur possédé par une cible qui est une menace en utilisant les informations d'environnement et des informations de performances qui indiquent les performances du capteur possédé par la cible ; et
(c) une étape de calcul d'une route de recherche jusqu'à l'objet, sur la base de la plage efficace de recherche de l'unité de capteur de recherche, de la plage efficace de recherche du capteur possédé par la cible et d'une distribution de probabilités d'existence de la cible qui est une menace.

8. Procédé de support à la recherche selon la revendication 7,
dans lequel dans le traitement de l'étape (c), une route de recherche jusqu'à l'objet est calculée sur la base d'informations d'objet comportant une position d'objet estimée, une distribution de probabilités d'existence, une direction de déplacement et une vitesse de déplacement générées par l'unité de capteur de recherche par rapport à l'objet.

9. Procédé de support à la recherche selon la revendication 8, comprenant :
(d) une étape d'estimation d'une date et une heure d'arrivée pour arriver à la position d'objet estimée en utilisant les informations d'environnement, d'estimation d'une distribution de probabilités d'existence d'objet à la date et l'heure d'arrivée en utilisant les informations d'objet, d'estimation d'un environnement de la position d'objet estimée à la date et l'heure d'arrivée en utilisant les informations d'environnement, et en utilisant la distribution estimée de probabilités d'existence d'objet et l'environnement estimé de la position d'objet, de calcul d'une probabilité de détection de l'objet à la date et l'heure d'arrivée à la position d'objet estimée.

10. Procédé de support à la recherche selon la revendication 9, comprenant :
(e) une étape d'estimation d'une date et une heure d'arrivée pour arriver à la position d'objet estimée en utilisant les informations d'environnement, d'estimation d'une distribution de probabilités d'existence d'objet à la date et l'heure d'arrivée en utilisant les informations d'objet, d'estimation d'un environnement de la position d'objet estimée à la date et l'heure d'arrivée en utilisant les informations d'environnement, et en utilisant la distribution estimée de probabilités d'existence d'objet et l'environnement estimé de la position d'objet, et en utilisant des informations de performances qui indiquent les performances du capteur possédé par la cible qui est une menace et l'environnement estimé de la position d'objet, de calcul d'une probabilité d'être détecté par la cible qui est une menace.

11. Procédé de support à la recherche selon la revendication 10, comprenant :
(f) une étape de calcul d'un coût de déplacement pour un temps de déplacement jusqu'à la position d'objet estimée en multipliant une valeur obtenue en multipliant la probabilité de détection à la position d'objet estimée par un degré d'exigence de la probabilité de détection, par une valeur obtenue en multipliant la probabilité d'être détecté à la position d'objet estimée par un degré d'exigence de la probabilité d'être détecté.

12. Procédé de support à la recherche selon la revendication 11, comprenant :
(g) une étape de génération d'informations d'affichage pour afficher la route de recherche, la probabilité de détection, la probabilité d'être détecté ou une combinaison de celles-ci.

13. Programme d'ordinateur comprenant des instructions qui, lorsqu'elles sont exécutées par un processeur, amènent le processeur à réaliser le procédé selon l'une quelconque des revendications 7 à 12.
